# EUROPÄISCHE PATENTSCHRIFT

(11) **EP 1 851 277 B1**
(45) Veröffentlichungstag und Bekanntmachung des Hinweises auf die Patenterteilung: **10.12.2008**
(21) Anmeldenummer: 06704372.9
(22) Anmeldetag: 07.02.2006
(51) Int. Cl.: C09D 7/00, C09D 7/12, C08G 18/80, C08K 9/04

(54) **LACKE ENTHALTEND PARTIKEL MIT GESCHÜTZTEN ISOCYANATGRUPPEN**
LACQUERS CONTAINING PARTICLES WITH PROTECTED ISOCYANATE GROUPS
VERNIS CONTENANT DES PARTICULES PRESENTANT DES GROUPES ISOCYANATE PROTEGES

(30) Priorität: 10.02.2005 DE 102005006130; 09.06.2005 DE 102005026700
(43) Veröffentlichungstag der Anmeldung: 07.11.2007
(73) Patentinhaber: Wacker Chemie AG, 81737 München (DE)
(72) Erfinder: STANJEK, Volker, 81477 München (DE); SCHAUER, Felicitas, 85653 Aying (DE); PFEIFFER, Jürgen, 84489 Burghausen (DE)
(74) Vertreter: Fritz, Helmut
(86) Internationale Anmeldenummer: PCT/EP2006/001058
(87) Internationale Veröffentlichungsnummer: WO 2006/084661

(56) Entgegenhaltungen:
- EP-A- 0 573 016
- EP-A- 0 872 500
- DE-A1- 10 326 538

## Beschreibung

Die Erfindung betrifft Beschichtungsformulierungen, insbesondere Deck- und Klarlacke, die Partikel enthalten, welche auf ihrer Oberfläche geschützte Isocyanatgruppen aufweisen.

Partikel - insbesondere Nanopartikel - enthaltende Beschichtungssysteme sind Stand der Technik. Entsprechendes Beschichtungen sind beispielsweise in EP 1 249 470, EP 0 573 016 A, WO 03/16370, US 20030194550 oder US 20030162015 beschrieben. Die Partikel führen dabei zu einer Steigerung der Kratzfestigkeit der entsprechenden Beschichtungen sowie gegebenenfalls auch ihrer Chemikalienbeständigkeit.

Ein häufig auftretendes Problem beim Einsatz der - in der Regel anorganischen - Partikel in organischen Beschichtungssystemen besteht in einer meist unzureichenden Verträglichkeit von Partikel und Lackmatrix. Dies kann dazu führen, daß sich die Teilchen nicht hinreichend gut in einer Lackmatrix dispergieren lassen. Zudem können sich selbst gut dispergierte Partikel bei längeren Stand- oder Lagerzeiten absetzen, wobei sich gegebenenfalls größere Aggregate bzw. Agglomerate ausbilden, die sich auch bei einer Redispergierung nicht bzw. nur schlecht in die ursprünglichen Teilchen auftrennen lassen. Die Verarbeitung von solchen inhomogenen Systemen ist in jedem Falle äußerst schwierig, oftmals sogar unmöglich. Lacke, die nach ihrer Auftragung und Härtung über glatte Oberflächen verfügen, lassen sich auf diesem Weg in der Regel nicht oder nur sehr kostenintensiv herstellen.

Günstig ist daher der Einsatz von Partikeln, die auf ihrer Oberfläche über organische Gruppen verfügen, welche zu einer gesteigerten Verträglichkeit mit der Lackmatrix führen. Auf diese Weise wird der anorganische Partikel durch eine organische Hülle "maskiert". Besonders günstige Lackeigenschaften können dabei erreicht werden, wenn die organischen Funktionen auf den Partikeloberflächen zudem auch noch gegenüber der Lackmatrix reaktiv sind, so daß sie unter den jeweiligen Härtungsbedingungen des entsprechenden Lackes mit der Matrix reagieren können. So gelingt es, die Partikel während der Lackhärtung chemisch in die Matrix einzubauen, was oftmals besonders gute mechanische Eigenschaften aber auch eine gute Chemikalienbeständigkeit zur Folge hat. Derartige Systeme sind beispielsweise in DE 102 47 359 A1, EP 832 947 A oder EP 0 872 500 A1 beschrieben. Nachteilig an den hier beschriebenen Systemen sind die in der Regel relativ hohen Anteile der vergleichsweise teuren Nanopartikel am Gesamtfeststoffgehalt des Lackes.

Des weiteren ist auch der Einsatz von Beschichtungen bekannt, die ein mit Nanopartikeln modifiziertes Bindemittel enthalten. Diese können hergestellt werden, indem man die mit einer reaktiven Funktionalität ausgestatteten Partikel mit einem Bindemittel mit einer komplementären Funktion umsetzt. D.h. hier wird das organofunktionelle Partikel nicht erst bei der Lackhärtung sondern bereits bei der Bindemittelherstellung chemisch in die Lackmatrix eingebaut. Derartige Systeme sind beispielsweise in EP 1 187 885 A, DE 103 26 583 A1, oder WO 01/05897 beschrieben. Sie besitzen jedoch den Nachteil, in ihrer Herstellung relativ aufwendig zu sein, was zu hohen Herstellungskosten führt.

Bei einem besonders wichtigen Lacktyp wird ein Lackharz aus hydroxyfunktionellen Prepolymeren eingesetzt, die bei der Lackhärtung mit einem isocyanatfunktionellen Härter zur Reaktion gebracht werden. Diese Polyurethanlacke zeichnen sich durch besonders gute Eigenschaften, beispielsweise durch eine überlegene Chemikalienbeständigkeit aus, dagegen ist die unzureichend. Kratzfestigkeit dieser Systeme noch Typischerweise werden sie in besonders hochwertigen und anspruchsvollen Anwendungsgebieten verwendet, beispielsweise als Klar- bzw. Decklacke für OEM-Lackierungen in der Automobil- und Fahrzeugindustrie. Ebenso bestehen auch die meisten Decklacke für Automobilreparaturen aus derartigen isocyanathärtenden Systemen.

Typischerweise unterscheidet man zwei unterschiedliche Polyurethan-Lacksysteme, die sogenannten 2K- und 1K-Systeme. Erstere bestehen aus zwei Komponenten, von denen eine im wesentlichen aus dem Isocyanathärter besteht, während das Lackharz mit seinen isocyanatreaktiven Gruppen in der zweiten Komponente enthalten ist. Beide Komponenten müssen dabei getrennt gelagert und transportiert werden und dürfen erst kurz vor der Verarbeitung vermischt werden, da die fertige Mischung nur eine stark eingeschränkte Topfzeit besitzt. Oftmals günstiger sind daher die sogenannten 1K-Systeme, die nur aus einer Komponente bestehen, in der neben dem Lackharz ein Härter mit geschützten Isocyanatgruppen vorliegt. 1K-Lacke werden thermisch gehärtet, wobei die Schutzgruppen der Isocyanateinheiten abgespalten werden, und die entschützten Isocyanate anschliessend mit dem Lackharz reagieren können. Typische Einbrenntemperaturen von derartigen 1K-Lacken liegen bei 120-160 °C.

Insbesondere bei diesen hochwertigen Lacken wäre eine weitere Eigenschaftsverbesserung wünschenswert. Dies gilt insbesondere für Fahrzeuglackierungen. So ist vor allem die erreichbare Kratzfestigkeit von herkömmlichen Autolacken noch nicht hinreichend, so daß es z.B. in der Waschstraße durch Partikel im Waschwasser zu einer merklichen Verkratzung des Lackes kommt. Auf Dauer wird dadurch der Glanz des Lackes nachhaltig geschädigt. Hier wären Formulierungen wünschenswert, mit denen sich gesteigerte Kratzfestigkeiten erreichen lassen.

Ein besonders vorteilhafter Weg zur Lösung dieser Aufgabe ist die Verwendung von Partikeln, die auf ihrer Oberfläche geschützte Isocyanatfunktionen aufweisen. Werden derartige Partikel in 1K-Polyurethanlacken eingesetzt, so werden bei der Lackhärtung auch die Isocyanatfunktionen auf den Partikeloberflächen freigesetzt und der Partikel wird chemisch in den Lack eingebaut. Zudem Steigern die geschützten Isocyanatfunktionen die Verträglichkeit von Partikel und Lackmatrix.

Derartige Partikel enthaltend geschützte Isocyanatfunktionen sind prinzipiell bereits bekannt. Typischerweise werden sie hergestellt, indem man Partikel mit freien Silicium- oder Metallhydroxidfunktionen mit alkoxysilylfunktionellen Organosiliciumverbindungen kondensiert, deren organischer Rest geschützte Isocyanatfunktionen enthält. Derartige maskierte Isocyanatgruppen aufweisende Organosiliciumverbindungen sind bereits beschrieben, z.B. in DE 34 24 534 A1, EP 0 212 058 B1, JP 08-291186 oder JP 10-067787. Die geschützte Isocyanatfunktionen aufweisenden Partikel selbst, sowie deren Einsatz in Beschichtungen, sind in EP 0 872 500 A beschrieben.

In WO 2006/018144 A1 ist eine Beschichtungsformulierung beschrieben, die einen Lackhärter, der über geschützte oder ungeschützte NCO-Funktionen verfügt, ein hydroxylgruppenfunktionelles Lackharz und 3 bis 40 Gew.-% Partikel enthält, die beispielsweise hergestellt werden aus SiO₂-Organosol mit durch 2-Butanonoxim geschütztem Isocanatomethyl-trimethoxysilan.

US 2003/0164118 A1 beschreibt härtbare Pulverbeschichtungszusammensetzungen, in denen der Härter aus geschützten Isocyanaten bestehen kann.

Tatsächlich läßt sich die Kratzfestigkeit von Lacken durch den Einbau von derartigen Partikeln merklich steigern. Allerdings werden bei sämtlichen im Stand der Technik beschriebenen Verfahren beim Einsatz dieser Partikel noch keine optimalen Ergebnisse erzielt. Insbesondere die in EP 0 872 500 A beschriebenen Systeme weisen dermaßen hohe Partikelgehalte auf, daß eine Verwendung derartiger Lacke in großen Serienlackierungen schon allein aus Kostengründen nur schwer realisierbar sein wird.

Aufgabe der Erfindung war daher die Entwicklung eines Lacksystems, das die Nachteile entsprechend des Standes der Technik überwindet.

Gegenstand der Erfindung sind Beschichtungsformulierungen (B) enthaltend
a) 30-80 Gew.-%, bezogen auf den Feststoffanteil, eines Lackharzes (L)) mit reaktiven Gruppen,
b) 10-60 Gew.-%, bezogen auf den Feststoffanteil, eines Lackhärters (H), der über reaktive Funktionen verfügt, mit denen er bei der Lackhärtung mit den reaktiven Gruppen des Lackharzes (L) bei thermischer Behandlung reagiert, wobei der Lackhärter (H) ein Melamin-Formaldehydharz enthält,
c) 0,1-12 Gew.-%, bezogen auf den Feststoffanteil, an Partikeln (P), die an ihrer Oberfläche über mindestens eine geschützte Isocyanatgruppe verfügen, die bei thermischer Behandlung unter Abspaltung einer Schutzgruppe eine Isocyanatfunktion freisetzt,
   wobei die Partikel (P) erhältlich sind durch eine Umsetzung von kolloidalen Metall- oder Siliciumoxidsolen mit Organosilanen (A), die über eine gegenüber den kolloidalen Metall- oder Siliciumoxidsolen reaktive Silylfunktion und über eine geschützte Isocyanatfunktion verfügen,
d) 0-80 Gew.-%, bezogen auf die gesamte Beschichtungsformulierung (B), eines Lösungsmittels oder eines Lösungsmittelgemisches und
e) gegebenenfalls weitere Lackkomponenten und Additive.

Ebenfalls Gegenstand der Erfindung sind Beschichtungsformulierungen (B) enthaltend
a) 30-80 Gew.-%, bezogen auf den Feststoffanteil, eines Lackharzes (L)) mit reaktiven Gruppen;
b) 10-60 Gew.-%, bezogen auf den Feststoffanteil, eines Lackhärters (H), der über reaktive Funktionen verfügt, mit denen er bei der Lackhärtung mit den reaktiven Gruppen des Lackharzes (L) bei thermischer Behandlung reagiert,
c) 0,1-12 Gew.-%, bezogen auf den Feststoffanteil, an Partikeln (P), die an ihrer Oberfläche über mindestens eine geschützte Isocyanatgruppe verfügen, die bei thermischer Behandlung unter Abspaltung einer Schutzgruppe eine Isocyanatfunktion freisetzt,
   wobei mehr als 50 % der geschützten Isocyanatgruppen der Partikel (P) mit Schutzgruppen versehen sind, die eine niedrigere Abspaltungstemperatur aufweisen, als mindestens 55 % der geschützten Isocyanatgruppen des Härters (H),
   wobei die Partikel (P) erhältlich sind durch eine Umsetzung von kolloidalen Metall- oder Siliciumoxidsolen mit Organosilanen (A), die über eine gegenüber den kolloidalen Metall- oder Siliciumoxidsolen reaktive Silylfunktion und über eine geschützte Isocyanatfunktion verfügen,
d) 0-80 Gew.-%, bezogen auf die gesamte Beschichtungsformulierung (B), eines Lösungsmittels oder eines Lösungsmittelgemisches und
e) gegebenenfalls weitere Lackkomponenten und Additive.

Der Feststoffanteil umfaßt dabei diejenigen Lackkomponenten, die bei der Lackhärtung im Lack verbleiben.

Der Erfindung liegt die Entdeckung zugrunde, daß sich beim Einsatz der Partikel (P) in Lacksystemen die Kratzfestigkeit der resultierenden Lacke nicht proportional zur Konzentration der eingesetzten Partikel ändert. So reichen im Gegenteil bereits die beschriebenen kleinen bzw. sehr kleinen Gehalte an Partikeln (P) aus, um eine deutliche Steigerung der Kratzfestigkeit von Klarlacken zu erreichen, wohingegen man auch durch z.T. deutlich höhere Anteile an Partikeln (P) keine weitere signifikante Steigerung der Kratzfestigkeit mehr erreichen kann.

Die kleinen Gehalte der relativ teuren Partikel (P) ermöglichen dabei zum einen eine vergleichsweise kostengünstige Herstellung von hochkratzfesten Lacken, zum anderen verringern die niedrigen Partikelgehalte die - gegebenenfalls negativen - Einflüsse der Partikel auf andere Lackeigenschaften, wie z.B. die Elastizität oder Transparenz und Oberflächenglätte des Lackes. Somit stellen die niedrigen Partikelgehalte einen großen Vorteil gegenüber dem Stand der Technik dar.

In einer bevorzugten Ausführung der Erfindung enthalten die Beschichtungsformulierungen (B) hydroxylfunktionelle Lackharze (L) .

Ferner werden Beschichtungsformulierungen (B) bevorzugt, deren Lackhärter (H) ein Melamin-Formaldehydharz enthält. Besonders bevorzugt werden jedoch Beschichtungsformulierungen (B), die einen Lackhärter (H) enthalten, der - ebenso wie die Partikel (P) - über geschützte Isocyanatgruppen verfügt, die bei thermischer Behandlung unter Abspaltung einer Schutzgruppe eine Isocyanatfunktion freisetzen.

Dabei sind die Partikel (P) bevorzugt erhältlich durch eine Umsetzung von kolloidalen Metall- oder Siliciumoxidsolen mit Organosilanen (A) der allgemeinen Formel (I)

(R¹O)₃₋ₙ(R²)ₙSi-A-NH-C(O)-X (I),

wobei
- **R¹**: Wasserstoff, Alkyl-, Cycloalkyl- oder Arylrest mit jeweils 1 bis 6 C-Atomen, wobei die Kohlenstoffkette durch nicht benachbarte Sauerstoff-, Schwefel- oder **NR³-**Gruppen unterbrochen sein kann,
- **R²**: Alkyl-, Cycloalkyl-, Aryl- oder Arylalkylrest mit jeweils 1 bis 12 C-Atomen, wobei die Kohlenstoffkette durch nicht benachbarte Sauerstoff-, Schwefel- oder **NR³**-Gruppen unterbrochen sein kann,
- **R³**: Wasserstoff, Alkyl-, Cycloalkyl-, Aryl-, Arylalkyl-, Aminoalkyl- oder Aspartatesterrest,
- **X**: eine Schutzgruppe darstellt, die bei Temperaturen zwischen 60 und 300 °C in Form von HX abgespalten wird, und dabei eine Isocyanatfunktion freisetzt, und
- **A**: einen zweibindigen, gegebenenfalls substituierten Alkylen-, Cycloalkylen- oder Arylen-Rest mit 1-10 Kohlenstoffatomen bedeuten, und
- n: die Werte 0, 1 oder 2 annehmen kann.

Bei der Gruppe **R¹** in der allgemeinen Formel (I) handelt es sich bevorzugt um Methyl- oder Ethylreste. Bei der Gruppe **R²** handelt es sich bevorzugt um Methyl-, Ethyl-, Isopropyl- oder Phenylreste. **R³** weist vorzugsweise höchstens 10 Kohlenstoffatome, insbesondere höchstens 4 Kohlenstoffatome auf. **A** stellt bevorzugt eine difunktionelle Kohlenstoffkette mit 1-6 Kohlenstoffatome, die gegebenenfalls mit Halogenatomen und/oder Alkylseitenketten substituiert sein kann, dar. Besonders bevorzugt stellt **A** eine (CH₂)₃-Gruppe oder eine CH₂-Gruppe dar.

Die bevorzugten Abspalttemperaturen der Schutzgruppen, insbesondere HX liegen bei 80 bis 200 °C, besonders bevorzugt bei 100 bis 170 °C. Als Schutzgruppen HX können sekundäre oder tertiäre Alkohole, wie Isopropanol oder *t*-Butanol, CH-acide Verbindungen wie z.B. Malonsäurediethylester, Acetylaceton, Acetessigsäureethylester, Oxime wie z.B. Formaldoxim, Acetaldoxim, Butanoxim, Cyclohexanonoxim, Acetophenonoxim, Benzophenonoxim oder Diethylenglyoxim, Lactame, wie z.B. Caprolactam, Valerolactam, Butyrolactam, Phenole wie Phenol, o-Methylphenol, N-Alkylamide wie z.B. N-Methylacetamid, Imide wie Phthalimid, sekundäre Amine wie z.B. Diisopropylamin, Imidazol, 2-Isopropylimidazol, Pyrazol, 3,5-Dimethylpryazol, 1,2,4-Triazol und 2,5 Dimethyl-1,2,4-triazol eingesetzt werden. Vorzugsweise werden dabei Schutzgruppen wie Butanoxim, 3,5-Dimethylpyrazol, Caprolactam, Malonsäurediethylester, Malonsäuredemethylester, Acetessigester, Diisopropylamin, Pyrrolidon, 1,2,4-Triazol, Imidazol und 2-Isopropylimidazol verwendet. Besonders bevorzugt werden Schutzgruppen eingesetzt, die eine niedrige Einbrenntemperatur ermöglichen wie z.B. Malonsäurediethylester, Malonsäuredimethylester, Butanoxim, Diisopropylamin, 3,5-Dimethylpyrazol und 2-Isopropylimidazol.

In einer bevorzugten Ausführungsform der Erfindung sind in den Beschichtungsformulierungen (B) mehr als 50 %, bevorzugt mindestens 70 % bzw. insbesondere bevorzugt mindestens 90 % der geschützten Isocyanatgruppen der Partikel (P) mit Schutzgruppen versehen, die eine niedrigere Abspaltungstemperatur aufweisen als Butanoxim. Besonders bevorzugt weisen die Schutzgruppen sämtlicher geschützter Isocyanatgruppen der Partikel (P) in der Beschichtungsformulierung (B) eine niedrigere Abspaltungstemperatur auf als Butanoxim.

Dabei werden Beschichtungsformulierungen (B) besonders bevorzugt, die Partikel (P) enthalten, deren geschützte Isocyanatgruppen zu mindestens 50 %, bevorzugt zu mindestens 70 % bzw. insbesondere bevorzugt 90 %, besonders bevorzugt zu 100 % mit Diisopropylamin, 3,5-Dimethylpyrazol oder 2-Isopropylimidazol geschützt sind.

In einer weiteren bevorzugten Ausführungsform der Erfindung zeichnen sich die erfindungsgemäßen Beschichtungsformulierungen (B) dadurch aus, daß mehr als 50 %, bevorzugt mindestens 70 % bzw. insbesondere bevorzugt mindestens 90 %, der geschützten Isocyanatgruppen der Partikel (P) mit Schutzgruppen versehen sind, die eine niedrigere Abspaltungstemperatur aufweisen, als mindestens 55 %, bevorzugt mindestens 70 %, besonders bevorzugt mindestens 90 % der Schutzgruppen der geschützten Isocyanatgruppen des Härters (H). Dabei werden insbesondere Lackforumulierungen bevorzugt, bei denen die Schutzgruppen sämtlicher geschützter Isocyanatgruppen der Partikel (P) in der Beschichtungsformulierung (B) eine niedrigere Abspaltungstemperatur aufweisen als sämtliche Schutzgruppen der geschützten Isocyanatgruppen des Härters (H).

Als Abspaltungstemperatur ist dabei diejenige Temperatur definiert, die mindestens notwendig ist, damit innerhalb von 30 Min mindestens 80 % der Schutzgruppen des entsprechenden Typs unter Freisetzung von freien Isocyanatfunktionen abgespalten werden. Die Abspalttemperatur kann dabei beilspielsweise durch thermogravimetrische Verfahren ermittelt werden. Dabei erfolgt die Vermessung der Abspalttemperatur der Isocyanatschutzgruppen auf den Partikeln (P) nicht durch eine Vermessung der Partikel (P) selbst, sondern durch eine Vermessung der Silanvorstufe (A). D.h. die dabei erhaltene Abspalttemperatur wird als Abspalttemperatur der Isocyanatschutzgruppen auf den Partikeln (P) definiert. Dieses Verfahren ist vorteilhaft, da sich die Partikel (P) oftmals nicht oder nur schlecht isolieren lassen und nur in gelöstem Zustand stabil sind.

Bei der Herstellung der Partikel (P) wird von kolloidalen Silicium- oder Metalloxiden ausgegangen, welche im allgemeinen als Dispersion der entsprechenden Oxidpartikel von Submikrongröße in einem wäßrigen oder nichtwäßrigen Lösungsmittel vorliegen. Dabei können unter anderem die Oxide der Metalle Aluminium, Titan, Zirkonium, Tantal, Wolfram, Hafnium und Zinn verwendet werden. Bevorzugt eingesetzt wird kolloidales Siliciumoxid. Hierbei handelt es sich im allgemeinen um eine Dispersion von Siliciumdioxid-Teilchen in einem wäßrigen oder nichtwäßrigen Lösungsmittel, wobei organische Lösungen kolloidaler Kieselsole besonders bevorzugt werden. In der Regel handelt es sich bei den Kieselsolen um 1-50 %-ige Lösungen, bevorzugt um eine 20-40 %-ige Lösungen. Typische Lösungsmittel sind dabei neben Wasser vor allem Alkohole, insbesondere Alkanole mit 1 bis 6 Kohlenstoffatomen, - häufig Isopropanol aber auch andere meist niedermolekulare Alkohole wie z.B. Methanol, Ethanol, n-Propanol, n-Butanol, Isobutanol und t-Butanol -, wobei die mittlere Teilchengröße der Siliciumdioxidpartikel bei 1-100 nm, bevorzugt bei 5-50 nm, besonders bevorzugt bei 8-30 nm liegt.

Die Herstellung der Partikel (P) aus kolloidalen Silicium- oder Metalloxiden kann nach verschiedenen Verfahren erfolgen. Bevorzugt erfolgt sie jedoch durch Zugabe der Silane (A) zum wäßrigen oder organischen Sol. Dieses Sol ist gegebenenfalls sauer, z.B. durch Salzsäure oder Trifluoressigsäure, oder alkalisch, z.B. durch Ammoniak, stabilisiert. Die Reaktion erfolgt in der Regel bei Temperaturen von 0-200 °C, bevorzugt bei 10-80 °C und besonders bevorzugt bei 20-60 °C. Die Reaktionszeiten liegen typischerweise zwischen 5 Min und 48 h, bevorzugt zwischen 1 und 24 h. Wahlweise können auch noch saure, basische oder schwermetallhaltige Katalysatoren zugesetzt werden. Bevorzugt werden diese in Mengen < 1000 ppm einsetzt. Besonders bevorzugt wird jedoch auf den Zusatz von gesonderten Katalysatoren verzichtet.

Da kolloidale Silicium- oder Metalloxidsole oftmals in wäßriger oder alkoholischer Dispersion vorliegen, kann es vorteilhaft sein, das bzw. die Lösungsmittel während oder nach der Herstellung der Partikel (P) gegen ein anderes Lösungsmittel bzw. gegen ein anderes Lösungsmittelgemisch auszutauschen. Dies kann beispielsweise durch destillatives Entfernen des ursprünglichen Lösungsmittels geschehen, wobei das neue Lösungsmittel bzw. Lösungsmittelgemisch in einem oder auch in mehreren Schritten vor, während oder auch erst nach der Destillation zugegeben werden kann. Geeignete Lösungsmittel können dabei beispielsweise Wasser, aromatische oder aliphatische Alkohole, wobei aliphatische Alkohole, insbesondere aliphatische Alkohole mit 1 bis 6 Kohlenstoffatomen (z.B. Methanol, Ethanol, n-Propanol, Isopropanol, n-Butanol, Isobutanol, t-Butanol, die verschiedenen Regioisomere des Pentanols und Hexanols) bevorzugt werden, Ester (z.B. Etylacetat, Propylacetat, Butylacetat, Butyldiglycolacetat, Methoxypropylacetat), Ketone (z.B. Aceton, Mehtylethylketon), Ether (z.B. Diethylether, *t*-Butylmethylether, THF) aromatische Lösungsmittel (Toluol, die verschiedenen Regioisomere des Xylols aber auch Mischungen wie Solvent Naphta), Lactone (z.B. Butyrolacton) oder Lactame (z.B. N-Methylpyrrolidon) darstellen. Dabei werden aprotische Lösungsmittel bzw. Lösungsmittelgemische, die ausschließlich oder aber zumindest teilweise aus aprotischen Lösungsmitteln bestehen, bevorzugt. Aprotische Lösungsmittel haben den Vorteil, das eventuelle Lösungsmittelreste bei der Lackhärtung nach der Abspaltung der Schutzgruppen nicht reaktiv gegenüber Isocyanatfunktionen sind. Neben der Herstellung einer Partikeldispersion ist auch eine Isolierung der Partikel als Feststoff bevorzugt.

Die Reaktion zwischen den kolloidalen Silicium- oder Metalloxidsolen und den Organosilanen (A) findet bevorzugt direkt beim Durchmischen der Reaktionspartner statt. Besonders vorteilhaft ist es dabei, Silane (A) der allgemeinen Formel (I) einzusetzen, bei denen der Spacer A für eine CH₂-Brücke steht, da sich diese Silane (A) durch eine besonders hohe Reaktivität gegenüber den Hydroxylgruppen der Metall- oder Siliciumoxidpartikel auszeichnen, so daß die Funktionalisierung dieser Partikel mit diesen Silanen besonders schnell und bei niedrigen Temperaturen, insbesondere bereits bei Raumtemperatur durchgeführt werden kann. Dabei können die kolloidalen Metall- oder Siliciumoxide in einem wäßrigen oder auch wasserfreien protischen oder aprotischen Lösungsmittel funktionalisiert werden.

Werden dabei Silane (A) der allgemeinen Formel (I) eingesetzt, die nur über Monoalkoxysilylfunktionen verfügen (d.h. Silane der allgemeinen Formel (I) mit n = 2), so kann bei der Herstellung der Partikel (P) auf die Zugabe von Wasser verzichtet werden, da die Monoalkoxysilylgruppen direkt mit den Hydroxylfunktionen auf der Oberfläche der kolloidalen Metall-oder Siliciumoxidpartikel reagieren können. Werden hingegen Silane (A) mit Di- oder Trialkoxysilylgruppen eingesetzt (d.h. Silane der allgemeinen Formel (I) mit n = 0 oder 1), so ist der Zusatz von Wasser bei der Herstellung der Partikel (P) oftmals vorteilhaft, da die Alkoxysilane dann nicht nur mit den Hydroxylgruppen der kolloidalen Metall- oder Siliciumoxide sondern - nach ihrer Hydrolyse - auch miteinander reagieren können. Dabei entstehen Partikel (P), die über eine Hülle aus miteinander vernetzten Silanen (A) verfügen.

Bei der Herstellung der Partikel (P) können zur Oberflächenmodifizierung neben den Silanen (A) auch beliebige Gemische der Silane (A) mit anderen Silanen (S1), Silazanen (S2) oder Siloxanen (S3) eingesetzt werden. Die Silane (S1) verfügen dabei entweder über Hydroxysilylgruppen oder aber über hydrolysierbare Silylfunktionen, wobei letztere bevorzugt werden. Daneben können diese Silane über weitere Organofunktionen verfügen, es können aber auch Silane (S1) ohne weitere Organofunktionen verwendet werden.

Besonders bevorzugt werden Mischungen aus Silanen (A) mit Silanen (S1) der allgemeinen Formel (II)

(R¹O)_{4-a-b}(R²)ₐSiR⁴b (II)

eingesetzt, wobei
- **R¹**, **R²** und **R³**: die bei der allgemeinen Formel (I) angegebenen Bedeutungen aufweisen, und
- **R⁴**: gleiche oder verschiedene SiC-gebundene Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen, Isocyanatgruppen, Methacrylgruppen oder (Poly)glykolresten substituiert sind, wobei letztere aus Oxyethylen- und/oder Oxypropyleneinheiten aufgebaut sind, bedeutet,
- **a**: 0, 1, 2 oder 3, und
- **b**: 0, 1, 2 oder 3 bedeuten.

Dabei steht **a** bevorzugt für 0, 1 oder 2, während **b** bevorzugt 0 oder 1 bedeutet.

Als Silazane (S2) bzw. Siloxane (S3) werden besonders bevorzugt Hexamethyldisilazan bzw. Hexamethyldisiloxan eingesetzt.

Besonders bevorzugt enthalten die Beschichtungsformulierungen (B)
a) 40-70 Gew.-%, bezogen auf den Feststoffanteil, des eines Lackharzes (L),
b) 15-50 Gew.-%, bezogen auf den Feststoffanteil, eines des Lackhärters (H),
c) 0,1-10 Gew.-%, bezogen auf den Feststoffanteil, an Partikeln (P),
d) 20-70 Gew.-%, bezogen auf die gesamte Beschichtungs-formulierung (B1) bzw. (B2), eines Lösungsmittels oder eines Lösungsmittelgemisches und
e) gegebenenfalls weitere Lackkomponenten und Additive.

Besonders bevorzugt liegt der Anteil des oder der Lösungsmittel an der gesamten Beschichtungsformulierung (B) bei 20 bis 60 Gew.-%.

Der Gehalt an Partikeln (P) liegt bevorzugt bei 0,2-12 Gew.-%, bezogen auf den Feststoffanteil, besonders bevorzugt bei 0,3-8 Gew.-%. In ganz besonders vorteilhaften Ausführungsformen der Erfindung liegt der Gehalt an Partikeln (P) bei 0,5-5 Gew.-%, bezogen auf den Feststoffanteil, insbesondere bei 0,8-3 Gew.-%.

Die neben den Partikeln (P) in den erfindungsgemäßen Beschichtungsformulierungen (B) enthaltenen Lackharze (L) bestehen bevorzugt aus hydroxylgruppen-haltigen Prepolymeren, besonders bevorzugt aus hydroxylgruppen-haltigen Polyacrylaten oder Polyestern. Derartige für die Lackherstellung geeigneten hydroxylgruppen-haltigen Polyacrylate und Polyester sind dem Fachmann hinlänglich bekannt und in der einschlägigen Literatur vielfach beschrieben.

Ebenso sind auch die in den erfindungsgemäßen Beschichtungen (B) enthaltenen Lackhärter (H), bevorzugt Melamin-Formaldehydharze oder geschützte Isocyanatgruppen enthalten, welche bei thermischer Behandlung unter Abspaltung einer Schutzgruppe eine Isocyanatfunktion freisetzen, als Stand der Technik hinreichend bekannt und vielfach in der entsprechenden Literatur beschrieben. Besonders bevorzugt werden dabei Härter (H), die geschützte Isocyanatfunktionen enthalten. Meist werden zu diesem Zweck gängige Di- und/oder Polyisocyanate eingesetzt, die zuvor mit den jeweiligen Schutzgruppen versehen worden sind. Als Schutzgruppen eignen sich dabei dieselben Verbindungen, die bei der allgemeinen Formel (I) sowie in den auf die allgemeine Formel (I) folgenden Absätzen als Schutzgruppen HX beschriebenen worden sind, wobei die Schutzgruppen der Partikel (P) und des Härters (H) jedoch gegebenenfalls - entsprechend der Maßgaben der beschriebenen bevorzugten Ausführungen der Erfindung - aufeinander abgestimmt sein sollten. Als Isocyanate können prinzipiell sämtliche gebräuchliche Isocyanate eingesetzt werden, wie sie in der Literatur vielfach beschrieben sind. Gängige Diisocyanate sind beispielsweise Diisocyanatodiphenylmethan (MDI), sowohl in Form von rohem oder technischem MDI als auch in Form reiner 4,4'- bzw. 2,4'-Isomeren oder deren Mischungen, Tolylendiisocyanat (TDI) in Form seiner verschiedenen Regioisomere, Diisocyanatonaphthalin (NDI), Isophorondiisocyanat (IPDI), perhydriertes MDI (H-MDI), Tetramethylendiisocyanat, 2-Methyl-pentamethylendiisocyanat, 2,2,4-Trimethylhexamethylendiiso-cyanat, Dodecamethylendiisocyanat, 1,4-Diisocyanatocyclohexan, 1,3-Diisocyanato-4-methylcyclohexan oder auch Hexamethylen-diisocyanat (HDI). Beispiele für Polyisocyanate sind polymeres MDI (P-MDI), Triphenylmethantriisocanat sowie auch sämtliche Isocyanuratoder Biuret-Trimerisate der oben aufgeführten Diisocyanate. Daneben können auch weitere Oligomere der oben genannten Isocyanate mit blockierten NCO-Gruppen eingesetzt werden. Sämtliche Di- und/oder Polyisocyanate können einzeln oder auch in Mischungen eingesetzt werden. Bevorzugt werden dabei die Isocyanurat- und Biuret-Trimerisate der - vergleichsweise UVstabilen - aliphatischen Isocyanate, besonders bevorzugt die Trimerisate von HDI und IPDI, verwendet.

Das Verhältnis der blockierten Isocyanatgruppen des Härters (H) und der Partikel (P) gegenüber den isocyanatreaktiven Gruppen des Lackharzes (L) wird üblicherweise von 0,5 bis 2, bevorzugt von 0,8 bis 1,5 und besonders bevorzugt von 1,0 bis 1,2 gewählt.

Des weiteren können die Beschichtungsformulierungen (B) auch noch die gängigen Lösungsmittel sowie die in Lackformulierungen üblichen Additive und Lackkomponenten enthalten. Als Lösungsmittel seien beispielhaft aromatische und aliphatische Kohlenwasserstoffe, Ester wie Butylacetat, Butyldiglykolacetat, Ethylacetat oder Methoxypropylacetat, Ether, Alkohole wie isoPropanol oder iso-Butanol, Ketone wie Aceton oder Butylmethylketon sowie Heterocyclen wie Lactone oder Lactame genannt. Ein weiteres wichtiges Lösungsmittel stellt Wasser dar. So sind wasserbasierende Lacke insbesondere wegen ihrer niedrigen VOC-Anteile (volatile organic compounds) von gehobenen Interesse. Als Additive wären hier u.a. Verlaufshilfsmittel, oberflächenaktive Substanzen, Haftvermittler, Lichtschutzmittel wie UV-Absorber und/oder Radikalfänger, Thixotropiermittel sowie weitere Feststoffe zu nennen. Zur Erzeugung der jeweils gewünschten Eigenschaftsprofile sowohl der Beschichtungsformulierungen (B) als auch der ausgehärteten Beschichtungen sind derartige Zusätze in der Regel unverzichtbar. Ebenso können die Beschichtungsformulierungen (B) auch Pigmente enthalten.

Bei einem bevorzugtem Verfahren werden die erfindungsgemäßen Beschichtungsformulierungen (B) hergestellt, indem die Partikel (P) während des Mischprozesses als Pulver oder als Dispersion in einem geeigneten Lösungsmittel zugesetzt werden. Daneben wird aber noch ein weiteres Verfahren bevorzugt, bei dem aus den Partikeln (P) und einer oder mehreren Lackkomponenten zunächst ein Masterbatch hergestellt wird, mit Partikelkonzentrationen >15 %, bevorzugt >25 % und besonders bevorzugt >35 % ist. Bei der Herstellung der erfindungsgemäßen Beschichtungsformulierungen (B) wird dieses Masterbatch dann mit den übrigen Lackkomponenten vermischt. Wird bei der Herstellung des Masterbatches von einer Partikeldispersion ausgegangen, so kann es vorteilhaft sein, wenn das Lösungsmittel der Partikeldispersion im Verlauf der Masterbatchherstellung entfernt wird, z.B. über einen Destillationsschritt, oder aber gegen ein anderes Lösungsmittel bzw. Lösungsmittelgemisch ausgetauscht wird.

Die erhaltenen Beschichtungsformulierungen (B) können zur Beschichtung von beliebigen Substraten zur Verbesserung der Kratzfestigkeit, Abriebbeständigkeit oder Chemikalienbeständigkeit verwendet werden. Bevorzugte Substrate sind Kunststoffe wie Polycarbonat, Polybutylenterephthalat, Polymethylmethacrylat, Polystyrol oder Polyvinylchlorid sowie andere, in einem vorgelagerten Schritt aufgebrachte, Beschichtungen.

Besonders bevorzugt können die Beschichtungsformulierungen (B) als kratzfeste Klar- oder Decklacke, insbesondere in der Fahrzeugindustrie, verwendet werden. Das Aufbringen des Beschichtungsmittels kann durch beliebige Verfahren wie Eintauch-, Sprüh-, und Gießverfahren erfolgen. Auch ein Aufbringen nach einem - wet in wet -Verfahren ist möglich. Die Aushärtung erfolgt durch Erwärmen unter den für blockierte Isocyanate erforderlichen Bedingungen und kann selbstverständlich durch den Zusatz von Katalysatoren beschleunigt werden.

Alle Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20 °C.

### Beispiele:

### Synthesebeispiel 1: Herstellung eines Alkoxysilans mit diisopropylamin-geschützten Isocyanatgruppen (Silan 1).

Es werden 86,0 g Diisopropylamin und 0,12 g Borchi® Katalysator (Katalysator VP 0244 der Firma Borchers GmbH) vorgelegt und auf 80 °C erwärmt. Innerhalb von 1 h werden 150,00 g Isocyanatomethyl-trimethoxysilan zugetropft und das Gemisch für 1 h bei 60 °C gerührt. ¹H-NMR und IR-Spektroskopie zeigen, daß das Isocyanatosilan vollständig umgesetzt wurde.

### Synthesebeispiel 2: Herstellung eines Alkoxysilans mit diisopropylamin-geschützten Isocyanatgruppen (Silan 2).

Es werden 74,5 g Diisopropylamin und 0,12 g Borchi® Katalysator (Katalysator VP 0244 der Firma Borchers GmbH) vorgelegt und auf 80 °C erwärmt. Innerhalb von 1 h werden 150,00 g 3-Isocyanatopropyl-trimethoxysilan zugetropft und das Gemisch für 1 h bei 60 °C gerührt. ¹H-NMR und IR-Spektroskopie zeigen, daß das Isocyanatosilan vollständig umgesetzt wurde.

### Synthesebeispiel 3: Herstellung von mit blockierten Isocyanatgruppen modifizierten SiO₂-Nanosol-Partikeln

1,40 g des nach Synthesebeispiel 1 hergestellten diisopropylamin-geschützten Isocyanatosilans (Silan 1) werden in 1,0 g Isopropanol gelöst. Dann werden innerhalb von 30 min 20 g eines SiO₂-Organosols (IPA-ST der Firma Nissan Chemicals, 30 Gew.-% SiO₂, 12 nm mittlerer Partikeldurchmesser) zugetropft und der pH-Wert wird durch Zugabe von Trifluoressigsäure auf 3,5 eingestellt. Die erhaltene Dispersion wird für 3 h bei 60 °C und anschließend für 18 h bei Raumtemperatur gerührt. Danach werden 18,1 g Methoxypropylacetat zugegeben. Man rührt für wenige Minuten und destilliert anschließend einen Großteil des Isopropanols bei 70 °C ab. D.h. es wird destilliert, bis das Nanopartikel-Sol auf 29,4 g eingeengt worden ist. Es resultiert eine Dispersion mit einem Festgehalt von 25,5 %. Der SiO₂-Gehalt liegt bei 20,8 % und der Gehalt geschützter Isocyanatgruppen in der Dispersion beträgt 0,17 mmol/g. Die Dispersion ist leicht getrübt und zeigt einen Tyndall-Effekt.

### Synthesebeispiel 4: Herstellung von mit blockierten Isocyanatgruppen modifizierten SiO₂-Nanosol-Partikeln

1,54 g des nach Synthesebeispiel 2 hergestellten diisopropylamin-geschützten Isocyanatosilans (Silan 2) werden vorgelegt. Dann werden innerhalb von 30 min 20 g eines SiO₂-Organosols (IPA-ST der Firma Nissan Chemicals, 30 Gew.-% SiO₂, 12 nm mittlerer Partikeldurchmesser) zugetropft und der pH-Wert wird durch Zugabe von Trifluoressigsäure auf 3,0 eingestellt. Die erhaltene Dispersion wird für 3 h bei 60 °C und anschließend für 24 h bei Raumtemperatur gerührt.
Die resultierende Dispersion hat einen Feststoffgehalt (Partikelgehalt) von 35 %, der SiO₂-Gehalt liegt bei 27,9 % und der Gehalt geschützter Isocyanatgruppen in der Dispersion beträgt 0,23 mmol/g. Die Dispersion ist leicht getrübt und zeigt einen Tyndall-Effekt.

### Beispiele 1-8: Herstellung einer 1K-Beschichtungsformulierung enthaltend SiO₂-Nanosol-Partikel, die mit blockierten Isocyanatgruppen modifiziert worden sind

Zur Herstellung einer erfindungsgemäßen Beschichtungsformulierung wird ein acrylatbasierendes Lackpolyol mit einem Festgehalt von 52,4 Gew.-% (Lösemittel: Solvent Naphta, Methoxypropylacetat (10:1)), einem Hydroxylgruppengehalt von 1,46 mmol/g Harzlösung und einer Säurezahl von 10-15 mg KOH/g mit Desmodur^{®} BL 3175 SN der Fa. Bayer (butanoxim-blockiertes Polyisocyanat, blockierter NCO-Gehalt von 2,64 mmol/g) vermischt. Die dabei eingesetzten Mengen der jeweiligen Komponenten können der Tabelle 1 entnommen werden. Anschließend werden die in Tabelle 1 angegebenen Mengen der nach Synthesebeispiel 3 hergestellten Dispersion zugegeben. Dabei werden jeweils molare Verhältnisse von geschützten Isocyanatfunktionen zu Hydroxylgruppen von 1,1 : 1 erreicht. Des weiteren werden jeweils 0,01 g einer Dibutylzinndilaurat und 0,03 g einer 10 %-igen Lösung ADDID^{®} 100 der Fa. TEGO AG (Verlaufshilfsmittel auf Basis Polydimethylsiloxan) in Isopropanol zugemischt, wodurch Beschichtungsformulierungen mit ca. 50 % Festgehalt erhalten werden. Diese anfänglich noch leicht trüben Mischungen werden für 48 h bei Raumtemperatur gerührt, wobei klare Beschichtungsformulierungen erhalten werden.

**Tabelle 1: Rezepturen der Lacke (Beispiel 1-9)**

| | Desmophen® | Desmodur® | Nanosol | Partikel- |
|---|---|---|---|---|
| | A 365 BA/X | BL 3175 SN | nach Syn.- | gehalt* |
| | | | bsp. 3 | |
| Beispiel 1 | 4,50 g | 2,73 g | 0,0 g | 0,0 % |
| (Vergleich**) | | | | |
| Beispiel 2 | 4,50 g | 2,72 g | 0,30 g | 1,7 % |
| Beispiel 3 | 4,50 g | 2,71 g | 0,38 g | 2,2 % |
| Beispiel 4 | 4,50 g | 2,70 g | 0,57 g | 3,2 % |
| Beispiel 5 | 4,50 g | 2,69 g | 0,76 g | 4,2 % |
| Beispiel 6 | 4,50 g | 2,64 g | 1,52 g | 8,2 % |
| Beispiel 7 | 4,50 g | 2,60 g | 2,11 g | 11,2 % |
| Beispiel 8 | 1,00 g | 0,49 g | 1,80 g | 34 % |
| (Vergleich**) | | | | |
| Beispiel 9 | 0,88 g | 0,40 g | 2,05 g | 41 % |
| (Vergleich**) | | | | |

| | | | | |
|---|---|---|---|---|
| * Anteil der Partikel nach Synthesebeispiel 3 am gesamten Festgehalt der jeweiligen Lackformulierung ** nicht erfindungsgemäß | | | | |

### Beispiel 10: Herstellung einer 1K-Beschichtungsformulierung enthaltend SiO₂-Nanosol-Partikel, die mit blockierten Isocyanatgruppen modifiziert worden sind

Zur Herstellung einer erfindungsgemäßen Beschichtung werden 4,50 g eines acrylatbasierendes Lackpolyols mit einem Festgehalt von 52,4 Gew.-% (Lösemittel: Solvent Naphta, Methoxypropylacetat (10:1)) , einem Hydroxylgruppengehalt von 1,46 mmol/g Harzlösung und einer Säurezahl von 10-15 mg KOH/g mit 2,71 g Desmodur^{®} BL 3175 SN der Fa. Bayer (butanoxim-blockiertes Polyisocyanat, blockierter NCO-Gehalt von 2,64 mmol/g) vermischt. Anschließend werden 0,29 g der nach Synthesebeispiel 4 hergestellten Dispersion zugegeben, die diisopropylamin-blockierte Isocyanatgruppen modifizierte SiO₂-Nanosol-Partikel enthält. Dies entspricht einem molaren Verhältnis von geschützten Isocyanatfunktionen zu Hydroxylgruppen von 1,1 : 1. Der Gehalt an Partikeln nach Synthesebeispiel 4 am gesamten Festgehalt liegt bei 2,2 %. Des weiteren werden 0,01 g einer Dibutylzinndilaurat und 0,03 g einer 10 %-igen Lösung ADDID^{®} 100 der Fa. TEGO AG (Verlaufshilfsmittel auf Basis Polydimethylsiloxan) in Isopropanol zugemischt, wodurch eine Beschichtungsformulierung mit ca. 50 % Festgehalt erhalten wird. Diese anfänglich noch leicht trübe Mischung wird für 48 h bei Raumtemperatur gerührt, wobei eine klare Beschichtungsformulierung erhalten wird.

### Herstellung und Bewertung von Lackfilmen aus den Lackformulierungen der Beispiele 1-10.

Die Beschichtungsmassen aus den Beispielen 1-9 werden jeweils mittels eines Filmziehgerätes Coatmaster^{®} 509 MC der Fa. Erichsen mit einem Rakel der Spalthöhe 120 µm auf einer Glasplatte aufgerakelt. Anschließend werden die erhaltenen Beschichtungsfilme in einem Umlufttrockenschrank für 30 Minuten bei 70°C und anschließend für 30 min bei 150°C getrocknet. Sowohl aus den Lackformulierungen der Beispiele als auch aus den Vergleichsbeispielen werden optisch einwandfreie, glatte Beschichtungen erhalten. Der Glanz der Beschichtungen wird mit einem Glanzmeßgerät Micro gloss 20° der Fa. Byk bestimmt und liegt bei allen Lackformulierung zwischen 159 und 164 Glanz-Einheiten.

Die Kratzfestigkeit der so erzeugten ausgehärteten Lackfilme wird mit einem Scheuerprüfgerät nach Peter-Dahn ermittelt. Hierzu wird ein Scheuervlies Scotch Brite^{®} 2297 mit einer Fläche von 45 x 45 mm mit einem Gewicht von 500 g beschwert. Mit diesem werden die Lackproben mit insgesamt 40 Hüben verkratzt. Sowohl vor Beginn als auch nach Beendigung der Kratzversuche wird der Glanz der jeweiligen Beschichtung mit einem Glanzmeßgerät Micro gloss 20° der Fa. Byk gemessen. Als Maß für die Kratzfestigkeit der jeweiligen Beschichtung wurde der Glanzverlust im Vergleich zum Ausgangswert bestimmt:

**Tabelle 2: Glanzverlust beim Kratztest nach Peter-Dahn**

| Lackprobe | Glanzverlust |
|---|---|
| Beispiel 1 (Vergleich*) | 72 % |
| Beispiel 2 | 30 % |
| Beispiel 3 | 32 % |
| Beispiel 4 | 27 % |
| Beispiel 5 | 29 % |
| Beispiel 6 | 32 % |
| Beispiel 7 | 25 % |
| Beispiel 8 (Vergleich*) | 26 % |
| Beispiel 9 (Vergleich*) | 24 % |
| Beispiel 10 | 30 % |

| | |
|---|---|
| * nicht erfindungsgemäß | |

Die Ergebnisse zeigen, daß selbst kleinste Gehalte der erfindungsgemäßen Partikel (P) zu einer deutlichen Steigerung der Kratzfestigkeit der entsprechenden Beschichtung führen. Die Beschichtungsformulierungen der nicht erfindungsgemäßen Beispiele 7 und 8, die deutlich höhere Partikelgehalte enthalten - und somit deutlich teurer sind - führen nicht zu Beschichtungen, deren Kratzfestigkeiten gegenüber den erfindungsgemäßen Beschichtungen signifikant verbessert wären.

## Patentansprüche

1. Beschichtungsformulierungen (B) enthaltend
a) 30-80 Gew.-%, bezogen auf den Feststoffanteil, eines Lackharzes (L)) mit reaktiven Gruppen,
b) 10-60 Gew.-%, bezogen auf den Feststoffanteil, eines Lackhärters (H), der über reaktive Funktionen verfügt, mit denen er bei der Lackhärtung mit den reaktiven Gruppen des Lackharzes (L) bei thermischer Behandlung reagiert, wobei der Lackhärter (H) ein Melamin-Formaldehydharz enthält,
c) 0,1-12 Gew.-%, bezogen auf den Feststoffanteil, an Partikeln (P), die an ihrer Oberfläche über mindestens eine geschützte Isocyanatgruppe verfügen, die bei thermischer Behandlung unter Abspaltung einer Schutzgruppe eine Isocyanatfunktion freisetzt,
wobei die Partikel (P) erhältlich sind durch eine Umsetzung von kolloidalen Metall- oder Siliciumoxidsolen mit Organosilanen (A), die über eine gegenüber den kolloidalen Metall- oder Siliciumoxidsolen reaktive Silylfunktion und über eine geschützte Isocyanatfunktion verfügen,
d) 0-80 Gew.-%, bezogen auf die gesamte Beschichtungsformulierung (B), eines Lösungsmittels oder eines Lösungsmittelgemisches und
e) gegebenenfalls weitere Lackkomponenten und Additive.

2. Beschichtungsformulierungen (B) enthaltend
a) 30-80 Gew.-%, bezogen auf den Feststoffanteil, eines Lackharzes (L)) mit reaktiven Gruppen,
b) 10-60 Gew.-%, bezogen auf den Feststoffanteil, eines Lackhärters (H), der über reaktive Funktionen verfügt, mit denen er bei der Lackhärtung mit den reaktiven Gruppen des Lackharzes (L) bei thermischer Behandlung reagiert,
c) 0,1-12 Gew.-%, bezogen auf den Feststoffanteil, an Partikeln (P), die an ihrer Oberfläche über mindestens eine geschützte Isocyanatgruppe verfügen, die bei thermischer Behandlung unter Abspaltung einer Schutzgruppe eine Isocyanatfunktion freisetzt,
wobei mehr als 50 % der geschützten Isocyanatgruppen der Partikel (P) mit Schutzgruppen versehen sind, die eine niedrigere Abspaltungstemperatur aufweisen, als mindestens 55 % der geschützten Isocyanatgruppen des Härters (H),
wobei die Partikel (P) erhältlich sind durch eine Umsetzung von kolloidalen Metall- oder Siliciumoxidsolen mit Organosilanen (A), die über eine gegenüber den kolloidalen Metall- oder Siliciumoxidsolen reaktive Silylfunktion und über eine geschützte Isocyanatfunktion verfügen,
d) 0-80 Gew.-%, bezogen auf die gesamte Beschichtungsformulierung (B), eines Lösungsmittels oder eines Lösungsmittelgemisches und
e) gegebenenfalls weitere Lackkomponenten und Additive.

3. Beschichtungsformulierungen (B) nach Anspruch 1 oder 2, bei denen die Lackharze (L) hydroxylfunktionelle Lackharze (L) sind.

4. Beschichtungsformulierungen (B) nach Anspruch 1 bis 3, bei denen der Lackhärter (H) geschützte Isocyanatgruppen enthält, die bei thermischer Behandlung unter Abspaltung einer Schutzgruppe eine Isocyanatfunktion freisetzen.

5. Beschichtungsformulierungen (B) nach Anspruch 1 bis 4, bei denen die Partikel (P) erhältlich sind durch eine Umsetzung von kolloidalen Metall- oder Siliciumoxidsolen mit Organosilanen (A) der allgemeinen Formel (I)
(R¹O)₃₋ₙ(R²)ₙSi-A-NH-C(O)-X (I),
wobei
**R¹** Wasserstoff, Alkyl-, Cycloalkyl- oder Arylrest mit jeweils 1 bis 6 C-Atomen, wobei die Kohlenstoffkette durch nicht benachbarte Sauerstoff-, Schwefel- oder **NR³**-Gruppen unterbrochen sein kann,
**R²** Alkyl-, Cycloalkyl-, Aryl- oder Arylalkylrest mit jeweils 1 bis 12 C-Atomen, wobei die Kohlenstoffkette durch nicht benachbarte Sauerstoff-, Schwefel- oder **NR³**-Gruppen unterbrochen sein kann,
**R³** Wasserstoff, Alkyl-, Cycloalkyl-, Aryl-, Arylalkyl-, Aminoalkyl- oder Aspartatesterrest,
**X** eine Schutzgruppe darstellt, die bei Temperaturen von 60 bis 300 °C in Form von HX abgespalten wird, und dabei eine Isocyanatfunktion freisetzt, und
**A** einen zweibindigen, gegebenenfalls substituierten Alkylen-, Cycloalkylen- oder Arylen-Rest mit 1-10 Kohlenstoffatomen bedeuten, und
**n** die Werte 0, 1 oder 2 annehmen kann.

6. Beschichtungsformulierungen (B) nach Anspruch 5, bei denen n = 2.

7. Beschichtungsformulierungen (B) nach Anspruch 1 bis 6, beidenen der Gehalt an Partikeln (P) bei 0,2-12 Gew.-%, bezogen auf den Feststoffanteil liegt.

8. Beschichtungsformulierungen (B) nach Anspruch 1 bis 7, bei denen die Abspalttemperaturen der Schutzgruppen bei 80 bis 200 °C liegen.

9. Beschichtungsformulierungen (B) nach Anspruch 1 bis 8, bei denen mehr als 50 % der geschützten Isocyanatgruppen der Partikel (P) mit Schutzgruppen versehen sind, die eine niedrigere Abspaltungstemperatur aufweisen als Butanoxim.

10. Beschichtungsformulierungen (B) nach Anspruch 1 bis 9, bei denen die Lackharze (L) aus hydroxylgruppen-haltigen Prepolymeren bestehen.

11. Beschichtungsformulierungen (B) nach Anspruch 1 bis 10, bei denen das Verhältnis der blockierten Isocyanatgruppen des Härters (H) und der Partikel (P) gegenüber den isocyanatreaktiven Gruppen des Lackharzes (L) 0,5 bis 2 beträgt.

12. Verwendung der Beschichtungsformulierungen (B) nach Anspruch 1 bis 11 als kratzfeste Klar- oder Decklacke.

## Claims

1. Coating formulations (B) comprising
a) 30-80% by weight, based on the solids fraction, of a film-forming resin (L) containing reactive groups,
b) 10-60% by weight, based on the solids fraction, of a coating curative (H) possessing reactive functions with which, for coating-material curing, it reacts on thermal treatment with the reactive groups of the film-forming resin (L), the coating curative (H) comprising a melamine-formaldehyde resin,
c) 0.1-12% by weight, based on the solids fraction, of particles (P) which possess on their surface at least one protected isocyanate group which on thermal treatment eliminates a protective group to release an isocyanate function,
the particles (P) being obtainable by a reaction of colloidal metal or silicon oxide sols with organosilanes (A) which possess a silyl function reactive toward the colloidal metal or silicon oxide sols and possess a protected isocyanate function,
d) 0-80% by weight, based on the overall coating formulation (B), of a solvent or a solvent mixture, and
e) if desired, further coating components and additives.

2. Coating formulations (B) comprising
a) 30-80% by weight, based on the solids fraction, of a film-forming resin (L) containing reactive groups,
b) 10-60% by weight, based on the solids fraction, of a coating curative (H) possessing reactive functions with which, for coating-material curing, it reacts on thermal treatment with the reactive groups of the film-forming resin (L),
c) 0.1-12% by weight, based on the solids fraction, of particles (P) which possess on their surface at least one protected isocyanate group which on thermal treatment eliminates a protective group to release an isocyanate function,
more than 50% of the protected isocyanate groups of the particles (P) having been provided with protective groups which have a lower elimination temperature than at least 55% of the protected isocyanate groups of the curative (H),
the particles (P) being obtainable by a reaction of colloidal metal or silicon oxide sols with organosilanes (A) which possess a silyl function reactive toward the colloidal metal or silicon oxide sols and possess a protected isocyanate function,
d) 0-80% by weight, based on the overall coating formulation (B), of a solvent or a solvent mixture, and
e) if desired, further coating components and additives.

3. Coating formulations (B) according to claim 1 or 2, wherein the film-forming resins (L) are hydroxyl-functional film-forming resins (L).

4. Coating formulations (B) according to claim 1 to 3, wherein the coating curative (H) comprises protected isocyanate groups which on thermal treatment eliminate a protective group to release an isocyanate function.

5. Coating formulations (B) according to claim 1 to 4, wherein the particles (P) are obtainable through a reaction of colloidal metal or silicon oxide sols with organosilanes (A) of the general formula (I)
(R¹O)₃₋ₙ(R²)ₙSi-A-NH-C(O)-X (I)
where
**R¹** denotes hydrogen, alkyl radical, cycloalkyl radical or aryl radical having in each case 1 to 6 C atoms, it being possible for the carbon chain to be interrupted by nonadjacent oxygen, sulfur or **NR³** groups,
**R²** denotes alkyl radical, cycloalkyl radical, aryl radical or arylalkyl radical having in each case 1 to 12 C atoms, it being possible for the carbon chain to be interrupted by nonadjacent oxygen, sulfur or **NR³** groups,
**R³** denotes hydrogen, alkyl radical, cycloalkyl radical, aryl radical, arylalkyl radical, amino-alkyl radical or aspartate ester radical,
**X** denotes a protective group which is eliminated at temperatures of 60 to 300°C in the form of **HX,** and releases an isocyanate function in the process, and
**A** represents a divalent unsubstituted or substituted alkylene radical, cycloalkylene radical or arylene radical having 1-10 carbon atoms, and
**n** can adopt the values 0, 1 or 2.

6. Coating formulations (B) according to claim 5, wherein n = 2.

7. Coating formulations (B) according to claim 1 to 6, wherein the amount of particles (P) is 0.2-12% by weight, based on the solids fraction.

8. Coating formulations (B) according to claim 1 to 7, wherein the elimination temperatures of the protective groups are 80 to 200°C.

9. Coating formulations (B) according to claim 1 to 8, wherein more than 50% of the protected isocyanate groups of the particles (P) have been provided with protective groups which have a lower elimination temperature than butane oxime.

10. Coating formulations (B) according to claim 1 to 9, wherein the film-forming resins (L) are composed of hydroxyl-containing prepolymers.

11. Coating formulations (B) according to claim 1 to 10, wherein the ratio of the blocked isocyanate groups of the curative (H) and of the particles (P) with respect to the isocyanate-reactive groups of the film-forming resin (L) is 0.5 to 2.

12. Use of the coating formulations (B) according to claim 1 to 11 as scratch-resistant clearcoat or topcoat materials.

## Revendications

1. Formulations de revêtement (B) contenant
a) 30 à 80 % en poids, par rapport à la part de solides, d'une laque (L) ayant des groupements réactifs,
b) 10 à 60 % en poids, par rapport à la part de solides, d'un agent de durcissement de laque (H) muni de fonctions réactives par lesquelles il réagit avec les groupements réactifs de la laque (L) lors du durcissement de la laque par traitement thermique, ledit agent de durcissement de laque (H) contenant une résine mélamine-formaldéhyde,
c) 0,1 à 12 % en poids, par rapport à la part de solides, de particules (P) qui sont munies à leur surface d'au moins un groupement isocyanate protégé qui libère une fonction isocyanate lors du clivage d'un groupement protecteur par traitement thermique,
les particules (P) pouvant être obtenues par une réaction entre des sols d'oxyde de silicium ou de métaux colloïdaux et des organosilanes (A) qui sont munis d'une fonction silyle réactive envers les sols d'oxyde de silicium ou de métaux colloïdaux et d'une fonction isocyanate protégée,
d) 0 à 80 %, par rapport à la formulation de revêtement totale (B), d'un solvant ou d'un mélange de solvants et
e) éventuellement des composants de laque supplémentaires et des additifs.

2. Formulations de revêtement (B) contenant
a) 30 à 80 % en poids, par rapport à la part de solides, d'une laque (L) ayant des groupements réactifs,
b) 10 à 60 % en poids, par rapport à la part de solides, d'un agent de durcissement de laque (H) muni de fonctions réactives par lesquelles il réagit avec les groupements réactifs de la laque (L) lors du durcissement de la laque par traitement thermique,
c) 0,1 à 12 % en poids, par rapport à la part de solides, de particules (P) qui sont munies à leur surface d'au moins un groupement isocyanate protégé qui libère une fonction isocyanate lors du clivage d'un groupement protecteur par traitement thermique,
plus de 50 % des groupements isocyanate protégés des particules (P) étant munis de groupements protecteurs qui présentent une température de clivage inférieure à au moins 55 % des groupements isocyanate protégés de l'agent de durcissement (H),
les particules (P) pouvant être obtenues par une réaction entre des sols d'oxyde de silicium ou de métaux colloïdaux et des organosilanes (A) qui sont munis d'une fonction silyle réactive envers les sols d'oxyde de silicium ou de métaux colloïdaux et d'une fonction isocyanate protégée,
d) 0 à 80 %, par rapport à la formulation de revêtement totale (B), d'un solvant ou d'un mélange de solvants et
e) éventuellement des composants de laque supplémentaires et des additifs.

3. Formulations de revêtement (B) selon la revendication 1 ou 2, dans lesquelles les laques (L) sont des laques (L) à fonction hydroxyle.

4. Formulations de revêtement (B) selon les revendications 1 à 3, dans lesquelles l'agent de durcissement de laque (H) contient des groupements isocyanate protégés qui libèrent une fonction isocyanate lors du clivage d'un groupement protecteur par traitement thermique.

5. Formulations de revêtement (B) selon les revendications 1 à 4, dans lesquelles les particules (P) peuvent être obtenues par une réaction entre des sols d'oxyde de silicium ou de métaux colloïdaux et des organosilanes (A) de formule générale (I)
(R¹O)₃₋ₙ(R²)ₙSi-A-NH-C(O)-X (I)
dans laquelle
R¹ représente l'hydrogène, un radical alkyle, cycloalkyle ou aryle avec à chaque fois 1 à 6 atomes C, la chaîne carbonée pouvant être interrompue par des groupements oxygène, soufre ou NR³ non adjacents,
R² représente un radical alkyle, cycloalkyle, aryle ou arylalkyle avec à chaque fois 1 à 12 atomes C, la chaîne carbonée pouvant être interrompue par des groupements oxygène, soufre ou NR³ non adjacents,
R³ représente l'hydrogène, un radical alkyle, cycloalkyle, aryle, arylalkyle, aminoalkyle ou ester d'aspartate,
X X représente un groupement protecteur qui est clivé et à des températures de 60 à 300 °C sous la forme de HX qui libère ainsi une fonction isocyanate,
A représente un radical alkylène, cycloalkylène ou arylène bivalent éventuellement substitué ayant 1 à 10 atomes de carbone et
n peut prendre les valeurs 0, 1 ou 2.

6. Formulations de revêtement (B) selon la revendication 5, dans lesquelles n = 2.

7. Formulations de revêtement (B) selon les revendications 1 à 6, dans lesquelles la teneur en particules (P) est de 0,2 à 12 % en poids par rapport à la part de solides.

8. Formulations de revêtement (B) selon les revendications 1 à 7, dans lesquelles les températures de clivage des groupements protecteurs sont de 80 à 200 °C.

9. Formulations de revêtement (B) selon les revendications 1 à 8, dans lesquelles plus de 50 % des groupements isocyanate protégés des particules (P) sont munis de groupements protecteurs qui présentent une température de clivage inférieure au butanoxime.

10. Formulations de revêtement (B) selon les revendications 1 à 9, dans lesquelles les laques (L) sont constituées de prépolymères contenant des groupements hydroxyles.

11. Formulations de revêtement (B) selon les revendications 1 à 10, dans lesquelles le rapport entre les groupements isocyanate bloqués de l'agent de durcissement (H) et des particules (P) et les groupements réactifs envers les isocyanates de la laque (L) est de 0,5 à 2.

12. Utilisation des formulations de revêtement (B) selon les revendications 1 à 11 en tant que revêtements transparents ou revêtements supérieurs résistants aux éraflures.
